# EUROPEAN PATENT APPLICATION

(11) **EP 2 592 247 A1**
(43) Date of publication of application: **15.05.2013**
(21) Application number: 10854388.5
(22) Date of filing: 07.07.2010
(51) Int. Cl.: F01N 3/36, F01N 3/24, F02M 25/07

(54) **INTERNAL COMBUSTION ENGINE**

(71) Applicant: TOYOTA JIDOSHA KABUSHIKI KAISHA, Toyota-shi, Aichi-ken, 471-8571 (JP)
(72) Inventor: KANBA, Chika, Toyota-shi Aichi-ken 471-8571 (JP); HASHIMOTO, Eiji, Toyota-shi Aichi-ken 471-8571 (JP); MORI, Taiichi, Toyota-shi Aichi-ken 471-8571 (JP); UNO, Koki, Toyota-shi Aichi-ken 471-8571 (JP); FUJIWARA, Masahiro, Toyota-shi Aichi-ken 471-8571 (JP); HANADA, Shunichi, Toyota-shi Aichi-ken 471-8571 (JP)
(74) Representative: Intès, Didier Gérard André
(86) International application number: PCT/JP2010/004436
(87) International publication number: WO 2012/004831

(57) **Abstract**

The present invention provides an internal combustion engine includes: a turbocharger arranged in exhaust passage; EGR passage branching off from the exhaust passage downstream of a turbine of the turbocharger and connected to intake passage; a burner device arranged in the exhaust passage between the turbine and the portion where the EGR passage branches off to increase exhaust temperature; a bypass passage branching off from the exhaust passage between the turbine and the burner device and connected to the EGR passage; and a bypass valve to adjust flow rate of exhaust gas passing through bypass passage. When flow rate of the exhaust gas is increased, the bypass valve is open, and part of the exhaust gas is guided to the bypass passage. The flow rate of the exhaust gas to be supplied to the burner device is reduced, and the ignition performance of the burner device is ensured.

## Description

### Technical Field

The present invention relates to an internal combustion engine, and particularly relates to an internal combustion engine in which a burner device is arranged in an exhaust passage to raise exhaust temperature.

### Background Art

For internal combustion engines, there are cases wherein burner devices are arranged in exhaust passages, upstream of exhaust treatment devices (catalysts, etc.), and heated gases generated by the burner devices are employed to increase the exhaust temperatures, and to thereby supply heat to the exhaust treatment devices and encourage the warm-up of those devices. Typically, such burner devices are devices that employ appropriate ignition means that ensures ignition and combustion of fuels that are added in the exhaust passages.

In patent literature 1, a catalyst temperature raising device is disclosed that includes: an addition valve, for injecting a fuel; and ignition means having a heater element to ignite the injected fuel. The addition valve and the ignition means are so located that fuel injected via the addition valve directly contacts the heater element.

The ignition performance of the burner device is degraded when the flow rate of the exhaust gas supplied to the burner device is increased. The reasons for this are that the atmospheric gas temperature of the ignition means is reduced when the flow rate of the exhaust gas is high, and that, due to the gas velocity that has been increased, the ignition flame is extinguished after ignition.

One objective of the present invention, therefore, is to provide an internal combustion engine for which satisfactory burner device ignition performance is ensured, even when the flow rate of the exhaust gas supplied to the burner device is increased.

### Citation List

### Patent Literature

PTL 1: Japanese Patent Laid-Open No. 2006-112401

### Summary of Invention

One aspect of the present invention provides an internal combustion engine that is characterized by comprising:
a turbocharger, arranged in an exhaust passage;
an EGR passage, which branches off from the exhaust passage downstream of a turbine of the turbocharger, and is connected to an intake passage;
a burner device, arranged in the exhaust passage between the turbine and the portion where the EGR passage branches off, to increase exhaust temperature;
a bypass passage, which branches off from the exhaust passage between the turbine and the burner device, and is connected to the EGR passage; and
a bypass valve, to adjust a flow rate of exhaust gas passing through the bypass passage.

According to this arrangement, when the flow rate of the exhaust gas that is discharged by the turbine and supplied to the burner device is increased, the bypass valve is opened to introduce part of the exhaust gas to the bypass passage, and to reduce the flow rate of the exhaust gas to be supplied to the burner device. Therefore, the appropriate ignition performance of the burner device is ensured.

Preferably, the internal combustion engine further comprises:
acquisition means, for obtaining the flow rate of exhaust gas discharged by the turbine; and
bypass valve control means, for controlling the bypass valve based on the exhaust gas flow rate obtained by the acquisition means.

Preferably, the bypass valve control means opens the bypass valve when the exhaust gas flow rate, obtained by the acquisition means, is greater than a predetermined value, and closes the bypass valve when the exhaust gas flow rate, obtained by the acquisition means, is equal to or smaller than the predetermined value.

Preferably, the internal combustion engine further comprises:
a switching valve, for switching a state of communication between the EGR passage and the bypass passage, and a closed/open state of the EGR passage; and
switching valve control means, for controlling the switching valve,
wherein the switching valve control means controls the switching valve in such a manner that when the bypass valve is closed, communication between the EGR passage and the bypass passage is not established and the EGR passage is open, and when the bypass valve is open, communication between the EGR passage and the bypass passage is established and the EGR passage is
closed.

Preferably, the internal combustion engine further comprises:
an EGR valve located in the EGR passage between a portion where the bypass passage is connected, and the intake passage;
a second EGR passage that branches off from the exhaust passage upstream of the turbine of the turbocharger, and is connected to the intake passage;
a second EGR valve arranged in the second EGR passage; and
EGR control means for controlling the EGR valve and the second EGR valve,
wherein the EGR control means closes the EGR valve and opens the second EGR valve when the internal combustion engine is in a predetermined first operating range, in a low load side, and opens the EGR valve and closes the second EGR valve when the internal combustion engine is in a predetermined second operating range in a higher load side than the first operating range, and opens the EGR valve when the bypass valve is open, even when the internal combustion engine is in the first operating range.

Preferably, the internal combustion engine further comprises:
an EGR cooler, arranged in the EGR passage between the portion where the bypass passage is connected and the intake passage;
a cooler bypass passage, which bypasses a cooling passage of the EGR cooler;
a cooler switching valve, for switching the passage between the cooling passage and the cooler bypass passage; and
cooler control means, for controlling the cooler switching valve,
wherein the cooler control means controls the cooler switching valve in such a manner that when the bypass valve is closed, the cooling passage is open and the cooler bypass passage is closed, and when the bypass valve is open, the cooling passage is closed and the cooler bypass passage is open.

Preferably, the EGR passage is connected to the intake passage upstream of a compressor of the turbocharger.

Preferably, the acquisition means includes an exhaust gas flow sensor, arranged in the exhaust passage between the turbine and the portion where the bypass passage branches off.

Preferably, the burner device includes a fuel addition valve, employed to add fuel to the exhaust passage, and ignition means, for igniting the fuel added through the fuel addition valve.

Preferably, the burner device includes at least one of a burner catalyst, for oxidizing the fuel that is added, and an impingement plate, on which the added fuel impinges.

Preferably, the internal combustion engine further comprises an exhaust treatment device, arranged in the exhaust passage downstream of the burner device.

Preferably, the exhaust treatment device is located in the exhaust passage between the burner device and the portion where the EGR passage branches off.

According to the present invention, superior effects are exhibited, such that even when the flow rate of exhaust gas supplied to the burner device is increased, the satisfactory ignition performance of the burner device is ensured.

### Brief Description of Drawings

[Fig. 1] Fig. 1 is a schematic diagram for an internal combustion engine according to one embodiment of the present invention;
[Fig. 2] Fig. 2 is a side view, in longitudinal section, of a burner device;
[Fig. 3] Fig. 3 is a front view, in longitudinal section, of a burner device, taken from the upstream side;
[Fig. 4] Fig. 4 is a schematic diagram for the internal combustion engine when exhaust bypass is being performed;
[Fig. 5] Fig. 5 shows an EGR map;
[Fig. 6] Fig. 6 is a flowchart related to the EGR control; and
[Fig. 7] Fig. 7 is a flowchart related to the burner control.

### Description of Embodiments

A preferred embodiment of the present invention will now be described in detail. However, it should be noted that the embodiment of the present invention is not limited to that described below, and that the present invention includes various modifications and applications covered by the idea of this invention as regulated by the appended claims. The sizes, the materials and the shapes of components and the arrangement thereof are not limited to those described in this embodiment to restrict the technical scope of the present invention, unless they are especially so designated.

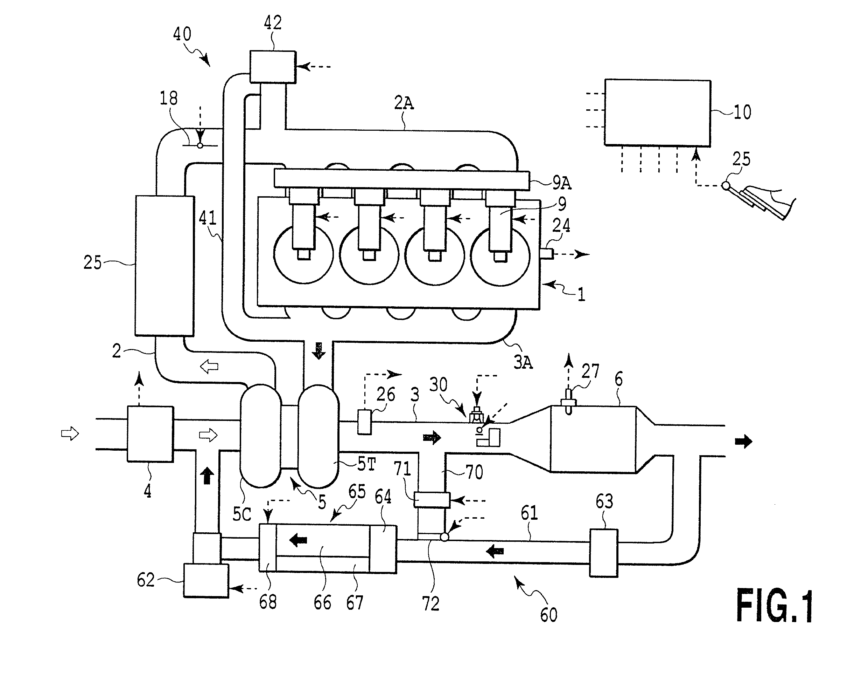

In Fig. 1, an internal combustion engine (engine) according to this embodiment is shown. The engine for this embodiment is a vehicle-mounted inline four-cylinder four-stroke diesel engine. In-cylinder fuel injection valves 9 are provided for the individual cylinders of an engine body or block 1, and high-pressure fuel retained in a common rail 9A is supplied to the individual in-cylinder fuel injection valves 9. An intake pipe 2 and an intake manifold 2A, which together form an intake passage, and an exhaust manifold 3A and an exhaust pipe 3, which together form an exhaust passage, are connected to the engine block 1. In the drawing, white arrows indicate the air intake flow, and black arrows indicate the exhaust gas flow. The upstream side is also called "the front", and the downstream side is also called "the rear".

A turbocharger 5 is arranged downstream of the exhaust manifold 3A. The turbocharger 5 includes a turbine 5T, arranged at a location immediately following the exhaust manifold 3A, and a compressor 5C, arranged in the middle of the intake pipe 2. It is preferable that a variable capacity control mechanism, such as a variable vane, be provided for the turbocharger 5.

An air flow meter 4 is provided in the intake pipe 2, upstream of the compressor 5C, in order to output a signal in accordance with the intake flow rate of air passing through the intake pipe 2. The air flow meter 4 is employed to detect the air intake volume (i.e., the intake flow rate) that enters the engine block 1 per unit time. An air cleaner (not shown) is arranged upstream of the air flow meter 4. An intercooler 25 and an electronically controlled throttle valve 18 are provided in the intake pipe 2 upstream of the compressor 5C.

The terminal end of the exhaust pipe 3 is connected to a muffler (not shown), and is open to the atmosphere at the outlet of the muffler. An oxidation catalyst 6 and an NOx catalyst (not shown) are located in series, from upstream, in the named order, in the exhaust pipe 3.

The oxidation catalyst 6 carries a reaction of unburned elements, such as Hc or CO, to O₂ to obtain Co, Co₂, H₂O, etc. The catalyst material employed can be, for example, Pt/CeO₂, Mn/CeO₂, Fe/CeO₂, Ni/CeO₂ or Cu/CeO₂.

The NOx catalyst is preferably formed of an NOx Storage Reduction (NSR) catalyst. The NOx catalyst has as a function the storage of NOx in exhaust gas, when the oxygen density of inflow exhaust gas is high, or the reduction of NOx when the oxygen density of inflow exhaust gas is low and a reduction element (e.g., fuel, etc.) is present. The NOx catalyst is provided by supporting, on the surface of a base material consisting of an oxide, such as alumina Al₂O₃, a catalyst element that is a precious metal, such as platinum Pt, and an NOx absorbing element. The NOx absorbing element is provided by selecting at least one, for example, of the alkali metals such as potassium K, sodium Na, lithium Li and cesium Cs, the alkaline earth elements such as barium Ba and calcium Ca, and the rare earth elements such as lanthanum Li and yttrium Y. It should be noted that the NOx catalyst may be a Selective Catalytic Reduction (SCR) NOx catalyst.

In addition to the oxidation catalyst 6 and the NOx catalyst, a diesel particulate filter (DPF) may also be arranged to collect particulate matter (PM), such as soot, in the exhaust gas. Preferably, a DPF is a continuously regenerating trap type that supports a catalyst made of precious metal, and continuously performs the oxidizing and burning of trapped particulates. It is preferable that the DPF be located at least downstream of the oxidation catalyst 6, and either upstream or downstream of the NOx catalyst. In the case of a spark ignition type internal combustion engine (gasoline engine), it is preferable that a three-way catalyst be provided in the exhaust passage. The oxidation catalyst 6, the NOx catalyst, the DPF and the three-way catalyst correspond to the exhaust treatment equipment of this invention.

An air flow meter, i.e., an exhaust gas flow sensor 26, for detecting the flow rate of exhaust gas discharged from the turbine 5T, and a burner device 30, for raising the temperature of the exhaust gas, are arranged from upstream, in the named order, in the exhaust pipe 3 between the turbine 5T and the oxidation catalyst 6. Specifically, the exhaust gas flow sensor 26 is located near the turbine 5T, and the burner device 30 is located near the oxidation catalyst 6.

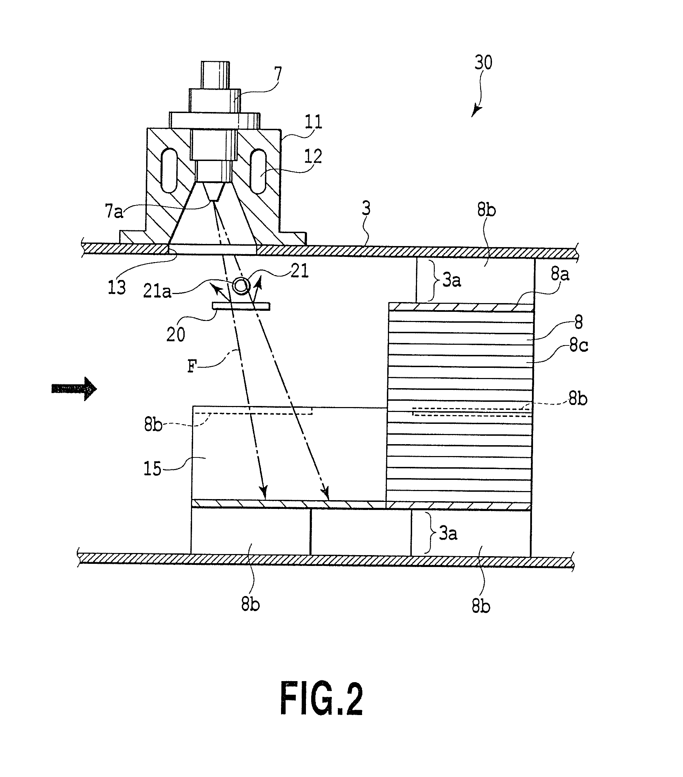

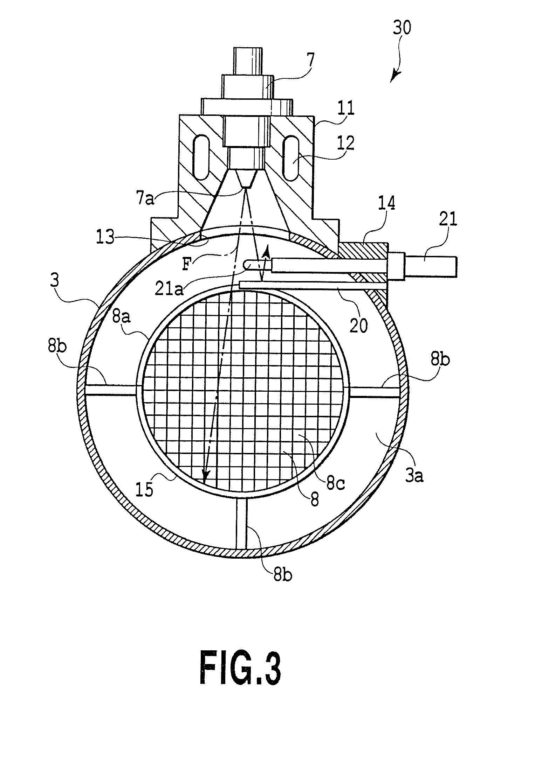

As illustrated in Figs. 2 and 3 in detail, the burner device 30 includes a fuel addition valve 7 and a glow plug 21 that serves as ignition means or as an ignition device. The burner device 30 also includes a burner catalyst 8 and an impingement plate 20.

Referring to Fig. 1, the engine includes an electronic control unit (hereinafter referred to as an ECU) 10 that controls various devices in accordance with the operating state, or upon receiving a request from an operator. The ECU 10 includes a CPU, for performing various operations related to the control of the engine, a ROM, used to store programs and data required for control, a RAM, used to temporarily store operation results obtained by the CPU, and an input/output port, for transmitting or receiving signals with respect to the outside.

Various sensors, including not only the air flow meter 4 and the exhaust gas flow sensor 26, but also a crank angle sensor 24, which outputs an electric signal that corresponds to the crank angle of the engine block 1, an accelerator position sensor 25, which outputs an electric signal that corresponds to the accelerator position, and a catalyst temperature sensor 27, which outputs an electric signal that corresponds to the temperature of the oxidation catalyst 6 (bed temperature), are connected to the ECU 10 by electric wires, and these output signals are transmitted to the ECU 10. Further, various devices, including the in-cylinder fuel injection valve 9, the throttle valve 18, the fuel addition valve 7 and the glow plug 21, are also connected to the ECU 10 by electric wires, and these devices are controlled by the ECU 10. The ECU 10 can detect the intake volume of air based on the output value of the air flow meter 4, can detect the engine revolutions based on the output value of the crank angle sensor 24, and can detect the required load on the engine based on the output value of the accelerator position sensor 25.

In this embodiment, when the burner device 30 is employed to perform the temperature increase control for heating the exhaust gas to increase the exhaust gas temperature, the ECU 10 operates the fuel addition valve 7 and the glow plug 21 appropriately. That is, the ECU 10 properly opens the fuel addition valve 7 (ON) to inject the fuel from the fuel addition valve 7. Further, the ECU 10 renders the glow plug 21 active (ON) to obtain a satisfactorily high temperature.

The burner device 30 will be described in detail, while referring to Figs. 2 and 3.

As illustrated, the fuel addition valve 7 is provided to add or inject a liquid fuel (diesel fuel) F into the exhaust pipe 3, and is connected to a fuel tank and a fuel pump (neither of them shown) via a pipe. The fuel addition valve 7 has a single injection hole 7a. A plurality of injection holes may also be provided.

The fuel addition valve 7 is inserted downward, in a direction perpendicular to the axis of the exhaust pipe 3, and is fixed to a valve mounting boss 11, which is attached to the uppermost side of the outer face of the exhaust pipe. Inside the valve mounting boss 11, a coolant passage 12 is defined, along which a coolant passes in order to cool the fuel inside the fuel addition valve 7. In the exhaust pipe 13, a valve hole 13 is formed to pass the fuel F that is injected via the fuel addition valve 7.

The glow plug 21 is arranged so that a heater element 21a, at the tip, is located slightly downstream of the fuel addition valve 7. The glow plug 21 is connected to a vehicle-mounted DC power supply via a boosting circuit (not shown), and when power is supplied to the glow plug 21, the heater element 21a generates heat. Through the heat generated by the heater element 21a, the fuel F that is added through the fuel addition valve 7 is ignited, forming a flame. Part of the added fuel F is ignited by directly contacting the heater element 21a, while the remainder of the added fuel F flows through the heater element 21a. Another type of ignition device, such as a ceramic heater or a spark plug, especially, a thermo-electric or a spark ignition type device, can also be employed.

The glow plug 21 is inserted, laterally from the side of the exhaust pipe 3, in a direction perpendicular to the axis of the exhaust pipe 3 and the axis of the fuel addition valve 7, and is fixed to a plug mounting boss 14 that is attached to the side portion of the outer wall of the exhaust pipe 3, while the glow plug 21 end is projected into the inside of the exhaust pipe 3 across the hole of the exhaust pipe 3.

The fuel addition valve 7 injects the fuel F to the heater element 21a from above, obliquely downward so that the fuel goes slightly downstream. The injected fuel F forms a fuel spraying course having a predetermined angle of spray. The heater element 21 is located during the fuel spraying course.

When ignition of the added fuel F has occurred, heated gas at a high temperature, including a flame, is generated. The heated gas is mixed with the exhaust gas present to raise the temperature of the exhaust gas. The exhaust gas, at the increased temperature, is supplied to the oxidation catalyst 6 and the NOx catalyst to encourage the warm-up and activation of these catalysts.

The burner catalyst 8 is employed to oxidize and reform the fuel that has been added through the fuel addition valve 7, and is located downstream of the fuel addition valve 7 and the glow plug 21. The burner catalyst 8 can be provided as an oxidization catalyst obtained, for example, by supporting rhodium, etc., on a zeolite carrier.

When the fuel F is supplied to the burner catalyst 8, which is activated at this time, oxidizing of the fuel is performed in the burner catalyst 8. Since heat is generated by an oxidation reaction, the temperature of the burner catalyst 8 is raised. Therefore, the temperature of the exhaust gas passing through the burner catalyst 8 can be increased.

Further, when the temperature of the burner catalyst 8 becomes high, carbon hydrates in the fuel which have a large number of carbons are broken down into carbon hydrates that have a smaller number of carbons and are highly reactive, and therefore, the fuel is reformed into a very reactive fuel.

In other words, the burner catalyst 8 serves in one way as a quick heater element that quickly generates heat, and in the other way as a reformed fuel discharging element that discharges reformed fuel.

The impingement plate 20 is inserted into and fixed to the plug mounting boss 14, and is projected to the inside of the exhaust pipe 3 across the hole of the exhaust pipe 3. The impingement plate 20 can be formed of a material, such as a SUS material, having superior resistance and shock resistance. For this embodiment, a rectangular shape is employed for the impingement plate 20.

The burner catalyst 8 is provided to occupy a part of the cross section of the exhaust passage. In this embodiment's case, as shown in Fig. 3, the exhaust pipe 3 and the burner catalyst 8 are circular in cross section, and are coaxially arranged with each other. Further, the outer diameter of the burner catalyst 8 is smaller than the inner diameter of the exhaust pipe 3. The burner catalyst 8 is a so-called straight flow type that includes a plurality of independent cells, extended linearly from the upstream end to the downstream end.

The burner catalyst 8 is located inside a cylindrical casing 8a that is supported in the exhaust pipe 3 by a plurality of stays 8b that are radially provided. An inside catalyst passage 8c is formed inside the burner catalyst 8, while a ring-shaped catalyst bypass 3a is formed in the circumference of the casing 8a.

Further, the burner catalyst 8 also includes a guide plate 15 that is projected to the upstream side. The guide plate 15 is attached to the front end, in the lower half portion of the casing 8a, and is formed like a gutter, having a semi-circular shape, in cross section, to be projected from the casing 8a to the upstream side. Similarly to the casing 8a, the guide plate 15 is supported in the exhaust pipe 3 by using a plurality of stays 8b that are radially provided. The guide plate 15 accepts the added fuel F, and guides and introduces the added fuel F to the burner catalyst 8 by also employing the flow of the exhaust gas.

As shown in Figs. 2 and 3, the fuel addition valve 7 and the burner catalyst 8 are so arranged that the added fuel F goes from the fuel addition valve 7 to the burner catalyst 8. Specifically, the fuel addition valve 7 injects the fuel F from above to the bottom face of the guide plate 15 of the burner catalyst 8, obliquely downward so as to inject the fuel slightly downstream. The thus injected fuel F forms a fuel injection course having a predetermined angle of spray.

During the fuel injection course, the heater element 21a of the glow plug 21 and the impingement plate 20 are located. The impingement plate 20 is arranged close to and slightly below the heater element 21a. Further, the glow plug 21 and the impingement plate 20 are inserted into the exhaust pipe 3 from the upper side portion of the exhaust pipe 3, and are extended parallel to each other and linearly in the horizontal direction.

The added fuel F directly impinges on the heater element 21a. Furthermore, as shown in Fig. 2, the added fuel F impinges on the entire impingement plate 20 in the directions to the front and to the rear, but as shown in Fig. 3, the added fuel impinges on only one part of the impingement plate 20 in the directions to the right and to the left (especially, to the right).

Therefore, the impingement plate 20 blocks part of the injection of the added fuel F, and returns the added fuel F to the heater element 21a of the glow plug 21 at a predetermined ratio. Further, the impingement plate 20 allows the remaining part of the added fuel F to flow through, and supplies the fuel F to the burner catalyst 8.

When the fuel F has impinged on the impingement plate 20, droplet breakup and atomization of the fuel F is encouraged, and dispersion and diffusion of the fuel is improved. Thus, ignition by the glow plug 21 is encouraged. The glow plug 21 is positioned substantially at the same height as the catalyst bypass 3a, arranged above the burner catalyst 8. Therefore, a flame generated by ignition is stretched mainly toward the catalyst bypass 3a, located above.

On the other hand, when the fuel has passed through the impingement plate 20 and is supplied to the burner catalyst 8, the fuel is oxidized and reformed inside the burner catalyst 8, as described above, and is discharged from the burner catalyst 8. Thereafter, the reformed fuel is properly oxidized and burnt in the oxidation catalyst 6 located below, and is then employed to further increase the temperature of the exhaust gas.

A flame and heated gas, thus generated through ignition by the glow plug 21, may also be employed to burn the reformed fuel that is discharged from the outlet of the burner catalyst 8.

Since the burner catalyst 8 and the impingement plate 20 are arranged in the burner device 30 in this manner, the performance of the burner device 30 can be further improved.

Referring again to Fig. 1, two EGR (Exhaust Gas Recirculation) devices, i.e., a high-pressure EGR device 40 and a low-pressure EGR device 60, are provided in the engine. The high-pressure EGR device 40 is a device that performs high-pressure EGR during which comparatively high-pressure exhaust gas is extracted from the upstream side of the turbine 5T, and is returned to the intake side. The low-pressure EGR device 60 is a device that performs low-pressure EGR during which comparatively low-pressure exhaust gas is extracted from downstream of the turbine 5T, and is returned to the intake side.

The high-pressure EGR device 40 includes a high-pressure EGR passage 41 (corresponding to a second EGR passage for this invention), which branches off from the exhaust passage upstream of the turbine 5T and is connected to the intake passage, and a high-pressure EGR valve 42 (corresponding to a second EGR valve for this invention), which is provided in the high-pressure EGR passage 41. The high-pressure EGR passage 41 branches off from the exhaust manifold 3A, and is connected to the intake manifold 2A. The opening of the high-pressure EGR valve 42 can be continuously changed, from the fully-closed position to the fully-open position, in order to adjust the flow rate of the exhaust gas, i.e., the high-pressure EGR gas, that flows in the high-pressure EGR passage 41. A high-pressure EGR cooler for cooling the high-pressure EGR gas may be provided for the high-pressure EGR device 40.

Furthermore, the low-pressure EGR device 60 includes a low-pressure EGR passage 61 (corresponding to an EGR passage for this invention), which branches off from the exhaust passage downstream of the turbine 5T and is connected to the intake passage, and a low-pressure EGR valve 62 (corresponding to an EGR valve for this invention), which is provided in the low-pressure EGR passage 61. The low-pressure EGR passage 61 branches off from the exhaust pipe 3 downstream of the oxidation catalyst 6, and is connected to the intake pipe 2 between the air flow meter 4 and the compressor 5C (i.e., the intake pipe 2 upstream of the compressor 5C). The opening of the low-pressure EGR valve 62 can be continuously changed, from the fully-closed position to the fully-open position, to adjust the flow rate of the exhaust gas, i.e., the low-pressure EGR gas, that flows in the low-pressure EGR passage 61.

The low-pressure EGR device 60 also includes a foreign object trapper 63, an EGR filter 64 and an EGR cooler 65 (corresponding to an EGR cooler for this invention). From upstream, these components are arranged, in the named order, in the low-pressure EGR passage 61. Also, these components are located in a portion extending from the portion where the low-pressure EGR passage 61 branches off, or from the upstream end of the low-pressure EGR passage 61, to the portion where the low-pressure EGR valve 62 is located.

When the exhaust gas is extracted from the downstream side of the oxidation catalyst 6 and is returned to the intake system, foreign objects (including weld splatters and residues of a catalyst support) may damage the individual members, especially the compressor 5C. Therefore, the foreign object trapper 63 is arranged in the furthest upstream portion in order to collect and remove such foreign objects. The foreign object trapper 63 includes a filter (e.g., a net) for collecting foreign objects.

The EGR filter 64 is a filter, as is the DPF filter, that is employed to collect particles, such as soot, in the low-pressure EGR gas, and is formed of finer meshes than the foreign object trapper 63. It is preferable that the EGR filter 64 also be a continuously regenerating trap type, wherein a catalyst made of a precious metal is supported. In this embodiment's case, the EGR filter 64 and the EGR cooler 65 are integrally provided, and the EGR filter is located immediately before the EGR cooler 65.

The EGR cooler 65 is employed to cool the low-pressure EGR gas, and includes a main passage 66, which serves as a cooling passage, through which the low-pressure EGR gas flows. It should be noted that for this embodiment a cooler bypass passage 67, which is an alternate passage for the main passage 66, and a cooler switching valve 68, which switches between the main passage 66 and the cooler bypass passage 67, are integrally formed for the EGR cooler 65. As shown in Fig. 1, the cooler switching valve 68 can be changed to either a cooler position, whereat the main passage 66 is open and the cooler bypass passage 67 is closed, or to the cooler bypass position whereat the main passage 66 is closed and the cooler bypass passage 67 is open.

The high-pressure EGR device 40 is the same type as a conventional, generally employed EGR device. One of the reasons that the low-pressure EGR device 60 is additionally provided is that the EGR control is to be appropriately performed even in the engine-operating range wherein the EGR process can not be properly performed by the high-pressure EGR device 40, and the engine-operating range where the EGR is enabled is to be expanded. For example, the temperature of low-pressure EGR gas is lower than the temperature of high-pressure EGR gas, and has a higher density. Therefore, in a case wherein the same volume or the same flow rate is employed for comparison, the EGR quantity can be increased. Another reason is that since the high-pressure EGR device 40 extracts exhaust gas at a position preceding the turbine 5T, there is a possibility that the amount of work performed by the turbocharger 5 will be lowered, or the engine output will be reduced. However, such a situation does not occur with the low-pressure EGR device 60. Therefore, the low-pressure EGR device 60 is appropriate for use in the high-load operating range.

Moreover, in this embodiment, a bypass passage 70 (corresponding to a bypass passage for this invention), which branches off from the exhaust pipe 3 between the turbine 5T and the burner device 30 and is connected to the low-pressure EGR passage 61, and a bypass valve 71 (corresponding to a bypass valve for this invention), which is employed to adjust the flow rate of exhaust gas, i.e., bypass gas, that flows through the bypass passage 70, are also provided.

The bypass passage 70 branches off from the exhaust pipe 3 at the position between the exhaust gas flow sensor 26 and the burner device 30, and is connected to the low-pressure EGR passage 61 at the position between the foreign object trapper 63 and the EGR filter 64. The opening of the bypass valve 71 can be continuously changed from the fully-closed position to the fully open position to adjust the flow rate of the bypass gas that flows through the bypass passage 70.

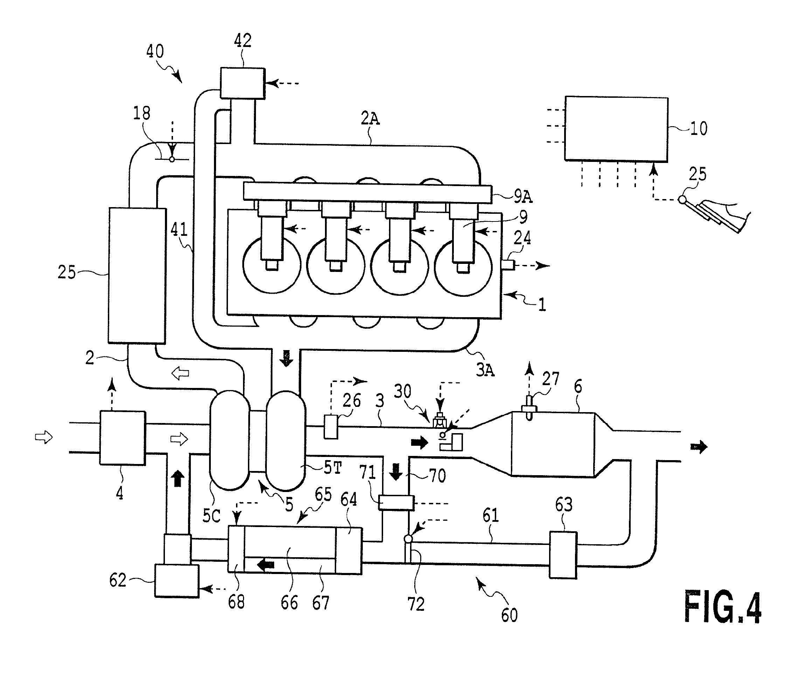

Moreover, a switching valve 72 (corresponding to a switching valve for this invention), which changes the state of communication between the low-pressure EGR passage 61 and the bypass passage 70, and switches between the open/closed state of the low-pressure EGR passage 61, is also provided. The switching valve 72 is located at the portion where the low-pressure EGR passage 61 and the bypass passage 70 join together, and a butterfly valve, for example, is employed; however, another type of valve, such as a shutter valve or a spool valve, may be employed. The switching valve 72 can be changed either to a bypass close position, shown in Fig. 1, at which communication between the low-pressure EGR passage 61 and the bypass passage 70 is inhibited and the low-pressure EGR passage 61 is open, or to a bypass open position, shown in Fig. 4, at which communication between the low-pressure EGR passage 61 and the bypass passage 70 is permitted and the low-pressure EGR passage 61 is closed.

The high-pressure EGR valve 42, the low-pressure EGR valve 62, the cooler switching valve 68, the bypass valve 71 and the switching valve 72 are all connected to the ECU 10, and are controlled by the ECU 10.

As described above, the ignition performance of the burner device 30 tends to be degraded when the flow rate of the supplied exhaust gas is increased. The reasons for this are that the temperature of the atmospheric gas of the ignition means is reduced when the flow rate of the exhaust gas is high, and that due to the gas velocity that has been increased, the flame is extinguished after ignition.

For example, when the flow rate of exhaust gas is increased more than 14g/s, the ignition performance of the burner device 30 tends to be deteriorated. In order to obtain satisfactory ignition combustion at such a high flow rate, 150°C or higher is required as the temperature of the atmospheric exhaust gas for the glow plug 21. However, it is actually difficult for this exhaust gas temperature to be acquired under such a condition with a high exhaust gas flow rate.

Further, the burner device 30 is activated to encourage the warning-up of the oxidation catalyst 6 when the temperature of the oxidation catalyst 6 is equal to or smaller than a predetermined value, or typically, when warming-up for the oxidation catalyst 6 is in progress. Furthermore, it is preferable that when the temperature of the oxidation catalyst 6 is reduced, the burner device 30 be activated, in order to prevent a reduction in the temperature. Temperature reduction of the oxidation catalyst 6 occurs mainly during the deceleration of the engine. This is because the exhaust gas at a comparatively low temperature, or fresh air (in a case where a fuel cut is being performed), is supplied to the oxidation catalyst 6 at a comparatively high flow rate.

However, as described above, when the conditions are such that there is a low exhaust temperature and a high exhaust flow rate, there is a case wherein the ignition performance of the burner device 30 is not appropriately exhibited, and the burner device 30 can not be activated. Therefore, a problem exists in that the range for the use of the burner device 30 is limited, and the burner device 30 can not be effectively utilized.

The burner device 30 also may not be operated in a case wherein, after the temperature of the oxidation catalyst 6 has been raised by activating the burner device 30, the conditions for a low exhaust temperature and a high exhaust flow rate are established by, for example, decelerating the engine, and thereby reducing the temperature of the oxidation catalyst 6. When for this reason the burner device 30 can not be activated, an increase in the temperature and the encouraging of the warming-up of the oxidation catalyst 6 can not be performed, and another problem, an increase in carbon monoxide emissions, would also occur.

Therefore, to resolve these problems, the above described arrangement is employed for this embodiment. That is, the bypass passage 70 is provided, which branches off from the exhaust pipe 3, before the burner device 30, and is connected to the low-pressure EGR passage 61, and the bypass valve 71 is provided for the bypass passage 70 to adjust the bypass gas flow rate.

With this structure, when the flow rate of the exhaust gas that is discharged from the turbine 5T and is to be supplied to the burner device 30 is increased, the bypass valve 71 can be opened to guide part of the exhaust gas to the bypass passage 70, and the flow rate of the exhaust gas to be supplied to the burner device 30 can be reduced. As a result, an appropriate burner device 30 ignition performance can be obtained.

Especially for this embodiment, the ECU 10 controls the bypass valve 71 based on the flow rate of the exhaust gas that is detected by the exhaust gas flow sensor 26. The ECU 10 opens the bypass valve 71 when the detected exhaust gas flow rate is greater than a predetermined value (e.g., 14 g/s), and closes the bypass valve 71 when the detected exhaust gas flow rate is equal to, or smaller than the predetermined value. As a result, when the exhaust flow rate is increased, the exhaust bypass can be performed properly, and a satisfactory ignition performance of the burner device 30 can be obtained. At a time other than when the exhaust flow rate has been increased, however, the exhaust bypass operation will not be performed, and the normal state can be maintained.

Further, when the bypass valve 71 is closed, the ECU 10 sets the switching valve 72 to the bypass closed position, and when the bypass valve 71 is open, sets the switching valve 72 to the bypass open position. Therefore, at a time other than when an exhaust bypass is performed, the normal state can be maintained by closing the bypass passage 70 and opening the low-pressure EGR passage 61, and at a time when the exhaust bypass is performed, bypass gas can be introduced into the low-pressure EGR passage 61.

Next, the EGR control and the control of the burner device (burner control), performed in this embodiment, will be described.

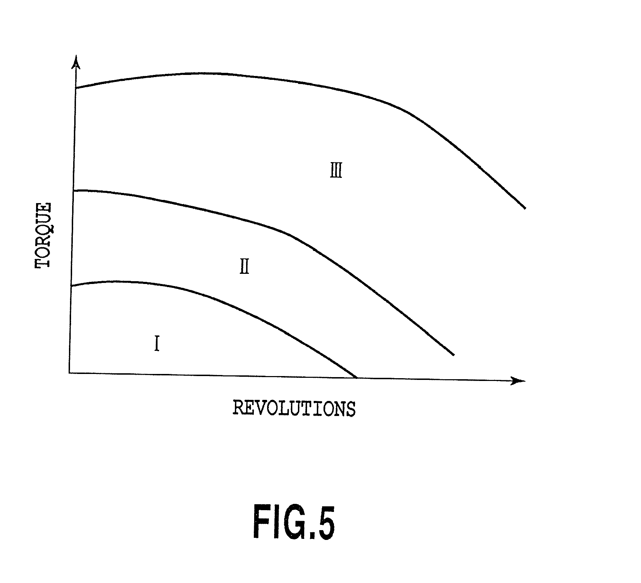

An EGR map employed for the EGR control is shown in Fig. 5. In this EGR map, the entire operating range of the engine is defined, and based on the number of revolutions and a torque (an engine output torque or a target torque) is divided into a first range I, a second range II and a third range III, in that order, beginning from the low load side. The first range I, on the lowest load side, is a range for performing only the high-pressure ERG (corresponding to a first operating range for this invention). The third range III, on the highest load side, is a range for performing only the low-pressure EGR (corresponding to a second operating range for this invention). The second range II for the intermediate load, located between the first range I and the third range III, is a range for performing both the high-pressure EGR and the low-pressure EGR.

In the first range I, only the high-pressure EGR valve 42 can be open, and the low-pressure EGR valve 62 is not open. In the third range III, only the low-pressure EGR valve 62 can be open, and the high-pressure EGR valve 42 is not open. In the second range II, both the low-pressure EGR valve 62 and the high-pressure EGR valve 42 can be open.

For the individual ranges, the target openings of the EGR valves 42 are 62 are determined in consonance with the number of revolutions and the torque, and the EGR valves 42 and 62 are controlled to match the target opening and the actual opening. That is, based on the engine revolutions, obtained from the detection output of the crank angle sensor 24, and the target torque, which corresponds to the requested torque, obtained from the detection output of the accelerator position sensor 25 , the ECU 10 examines the EGR map stored in advance to determine the target openings of the EGR valves 42 and 62, and also controls the EGR valves 42 and 62 to match the actual openings with the target openings. The target openings are set so as to obtain a target EGR ratio.

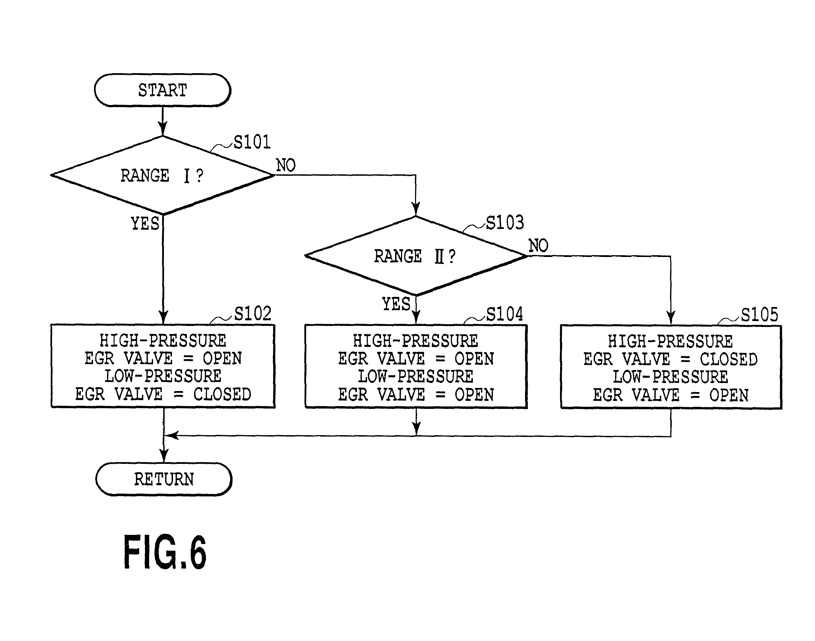

A flowchart for the routine related to the EGR control is shown in Fig. 6. This routine is repetitively performed by the ECU 10 for each predetermined operation period (e.g., 16 msec).

At step S101, a check is performed to determine whether the operating state of the engine is in the first range I. In a case wherein it is determined that the operating state is in the first range I, program control advances to step S102, whereat only the high-pressure EGR valve 42 is properly opened, and the low-pressure valve 62 is closed. Therefore, only the high-pressure EGR is performed.

However, in a case wherein it is determined that the operating state is not in the first range I, program control moves to step S103, whereat a check is performed to determine whether the engine operating state is in the second range II. In a case wherein the operating state is in the second range II, program control advances to step S104, whereat the high-pressure EGR valve 42 and the low-pressure EGR valve 62 are appropriately opened. As a result, both the high-pressure EGR and the low-pressure EGR are performed.

Further, in a case wherein it is determined that the engine operating state is not in the second range II, program control moves to step S105, whereat only the low-pressure EGR valve 62 is open, and the high-pressure EGR valve 42 is closed. Thus, only the low-pressure EGR is performed.

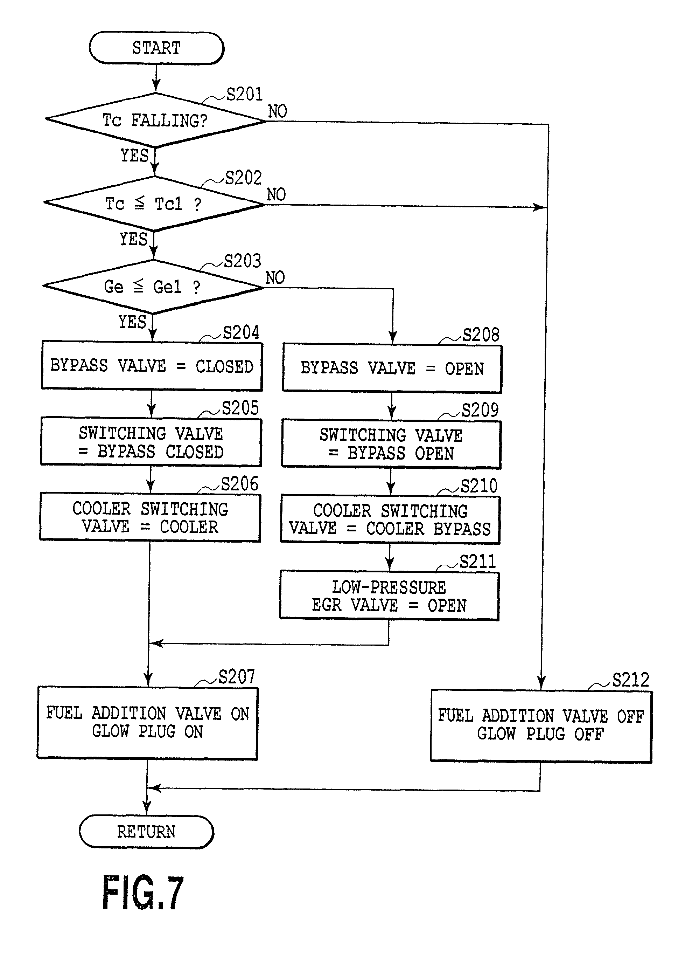

A flowchart for the routine related to the burner control is shown in Fig. 7. This routine is also repetitively performed by the ECU 10 for each predetermined operation period (e.g., 16 msec).

First, at step S201, a check is performed to determine whether a temperature Tc of the oxidation catalyst 6, detected by the catalyst temperature sensor 27, has been falling. When the falling of the temperature has not occurred, program control moves to step S212, whereat the burner device 30 is set to the inactive state, i.e., the fuel addition valve 7 is turned off, so as not to provide additional fuel, and the glow plug 21 is also turned off. This is done because, when the falling of the catalyst temperature due to deceleration, etc., has not occurred, i.e., when the catalyst temperature has been maintained, or has been rising, the burner device 30, especially, need not be activated, and it is also better for fuel efficiency not to activate the burner device 30.

Furthermore, in a case wherein it is determined that the catalyst temperature Tc has been falling, program control advances to step S202, whereat a check is performed to determine whether the catalyst temperature Tc is a predetermined value Tc1 (e.g., 200°C) or lower.

In a case wherein the catalyst temperature Tc is the predetermined value Te1 or lower, it is assumed that the warming-up of the oxidation catalyst 6 is being performed, and at step S203, a check is performed to determine whether an exhaust flow rate Ge, detected by the exhaust gas flow sensor 26, is a predetermined value Ge1 (e.g., 14g/s) or smaller.

In a case wherein it is determined that the exhaust flow rate Ge is the predetermined value Ge1 or smaller, program control advances to step S204, whereat the bypass valve 71 is either closed or is fully closed, and thereafter, at step S205, the switching valve 72 is held in the bypass closed position (see Fig. 1), and at step S206, the cooler switching valve 68 is held in the cooler position. That is, when the exhaust flow rate is low, as in this case, the exhaust bypass is not performed upstream of the burner device 30, and the normal state is selected, during which the low-pressure EGR can be performed based on the engine operating state.

Following this, at step S207, the burner device 30 is set to the active state, i.e., the fuel addition valve 7 is turned on to perform the addition of fuel, and the glow plug 21 is also turned on.

However, in a case wherein it is determined at step S203 that the exhaust flow rate Ge is greater than the predetermined value Ge1, program control moves to step S208, whereat the bypass valve 71 is open, and at step S209, the switching valve 72 is held in the bypass open position (see Fig. 4), and at step S210 the cooler switching valve 68 is held in the cooler bypass position, and at step S211 the low-pressure EGR valve 62 is open. Then, at step S207 the burner device 30 is set to the active state.

In other words, when the exhaust flow rate is high, as in this case, an exhaust bypass is performed upstream of the burner device 30, so as to reduce the flow rate of the exhaust gas to be supplied to the burner device 30. Furthermore, since the low-pressure EGR passage 61 is closed en route by closing the switching valve 72, the low-pressure EGR is not performed by using the exhaust gas extracted downstream of the oxidation catalyst 6.

It should be noted, however, that bypass gas is passed through the bypass passage 70 and the low-pressure EGR passage 61, and is returned to the intake passage. This is also one type of low-pressure EGR. At this time, the bypass gas does not pass the main passage 66 of the EGR cooler 65, but passes the cooler bypass passage 67. Therefore, the cooling of the bypass gas by the EGR cooler 65 does not occur, and the bypass gas, maintained at a comparatively high temperature, is returned to the intake passage.

As a result, compared with a case wherein the bypass gas is cooled by the EGR cooler 65, the intake air temperature is increased, and the temperature of the exhaust gas, especially the exhaust gas that is to be supplied to the burner device 30, is increased. This is very effective improvement for the ignition performance of the burner device 30.

Preferably, at step S208, the opening of the bypass valve 71 is changed in accordance with the detected exhaust flow rate Ge. That is, the opening of the bypass vale 71 is increased when the detected exhaust flow rate is high. With this arrangement, when the exhaust flow rate is high, the exhaust bypass flow rate can be increased, and the supply of the exhaust gas to the burner device 30 can be continued at a flow rate equal to or smaller than the predetermined value Ge1.

With regard to step S211, if it is assumed that the EGR control described above is performed, the low-pressure EGR valve 62 is not open when the engine operating state is in the first range I. However, the process in this case is not performed based on the EGR control, and even when the engine operating state is in the first range I, the low-pressure EGR valve 62 is open. The burner control takes precedence over the EGR control. Therefore, in a situation during which the engine operating state is in the first range I and deceleration is being performed, i.e., in a situation where a condition for a low exhaust temperature and a high exhaust flow rate is easily established, the low-pressure EGR can be performed using the bypass gas to increase the temperature of the exhaust gas to be supplied to the burner device 30. This is also a very effective for the improvement of the ignition performance of the burner device 30.

When the low-pressure EGR using the bypass gas is performed while the engine operating state is in the first range I, the total amount of EGR gas might become excessive, because the low-pressure EGR that originally was not to be performed is actually performed, in addition to the high-pressure EGR. As a countermeasure, it is preferable that the opening of the high-pressure EGR valve 42 be reduced to cancel out the surplus in the amount of the EGR gas. Further, in a case, including the above case, wherein the low-pressure EGR is to be performed using the bypass gas, it is preferable that a map, for example, be additionally prepared, so that the openings of the high-pressure EGR valve 42, the low-pressure EGR valve 62 and the bypass valve 71 can be controlled to obtain the desired amount of EGR gas.

The embodiment of the present invention has been described in detail; however, various other embodiments are available for the present invention. For example, at least one of the burner catalyst 8 and the impingement plate 20 may be eliminated from the burner device 30. In this embodiment, the exhaust gas flow sensor 26 has been employed to directly detect the flow rate of the exhaust gas that is discharged from the turbine 5T; however, the exhaust flow rate may be estimated. An estimation method employed can be an estimation based on an intake air volume detected by the air flow meter 4 and the openings of the EGR valves 42 and 62 and the bypass valve 71. These detections and estimations are collectively called acquisition.

It is preferable that the temperature of the exhaust treatment device employed for controlling the burner device be the temperature of the exhaust treatment device located at the furthest upstream position (the oxidation catalyst 6), as in this embodiment. However, the temperature of the exhaust treatment device arranged at the second or third furthest upstream position may be employed.

At least one of the burner catalyst and the exhaust pipe may have a non-circular shape, such as an oval or elliptic shape, in cross section. An arbitrary type and an arbitrary arrangement order are employed for the exhaust treatment equipment located downstream of the burner catalyst. The application and form of the internal combustion engine are also arbitrarily employed, and are not limited to the vehicle mount type, etc.

The present invention has been described with concreteness to a degree, but it should be understood that various modifications and alterations can be provided, without departing from the spirit and scope of the present invention in the appended claims. The embodiment of the present invention is not limited to the above described one, and the present invention covers various modifications and applications that are included in the idea of the invention as regulated by the claims. Therefore, the present invention should not be restrictively interpreted, and can also be applied for another arbitrary technology that is within the range of the idea of the present invention. Means of this invention for the solution of problems can be employed in combinations in as many ways as possible.

## Claims

1. An internal combustion engine **characterized by** comprising:
a turbocharger, arranged in an exhaust passage;
an EGR passage, which branches off from the exhaust passage downstream of a turbine of the turbocharger, and is connected to an intake passage;
a burner device, arranged in the exhaust passage between the turbine and the portion where the EGR passage branches off, to increase exhaust temperature;
a bypass passage, which branches off from the exhaust passage between the turbine and the burner device, and is connected to the EGR passage; and
a bypass valve, to adjust a flow rate of exhaust gas passing through the bypass passage.

2. The internal combustion engine according to claim 1, **characterized by** further comprising:
acquisition means, for obtaining the flow rate of exhaust gas discharged by the turbine; and
bypass valve control means, for controlling the bypass valve based on the exhaust gas flow rate obtained by the acquisition means.

3. The internal combustion engine according to claim 2, **characterized in that** the bypass valve control means opens the bypass valve when the exhaust gas flow rate, obtained by the acquisition means, is greater than a predetermined value, and closes the bypass valve when the exhaust gas flow rate, obtained by the acquisition means, is equal to or smaller than the predetermined value.

4. The internal combustion engine according to any one of claims 1 to 3, **characterized by** further comprising:
a switching valve, for switching a state of communication between the EGR passage and the bypass passage, and a closed/open state of the EGR passage; and
switching valve control means, for controlling the switching valve,
wherein the switching valve control means controls the switching valve in such a manner that when the bypass valve is closed, communication between the EGR passage and the bypass passage is not established and the EGR passage is open, and when the bypass valve is open, communication between the EGR passage and the bypass passage is established and the EGR passage is closed.

5. The internal combustion engine according to any one of claims 1 to 4, **characterized by** further comprising:
an EGR valve provided in the EGR passage between a portion where the bypass passage is connected and the intake passage;
a second EGR passage that branches off from the exhaust passage upstream of the turbine of the turbocharger, and is connected to the intake passage;
a second EGR valve arranged in the second EGR passage; and
EGR control means for controlling the EGR valve and the second EGR valve,
wherein the EGR control means closes the EGR valve and opens the second EGR valve when the internal combustion engine is in a predetermined first operating range in a low load side, and opens the EGR valve and closes the second EGR valve when the internal combustion engine is in a predetermined second operating range in a higher load side than the first operating range, and opens the EGR valve when the bypass valve is open, even when the internal combustion engine is in the first operating range.

6. The internal combustion engine according to any one of claims 1 to 5, **characterized by** further comprising:
an EGR cooler, arranged in the EGR passage between the portion where the bypass passage is connected and the intake passage;
a cooler bypass passage, which bypasses a cooling passage of the EGR cooler;
a cooler switching valve, for switching the passage between the cooling passage and the cooler bypass passage; and
cooler control means, for controlling the cooler switching valve,
wherein the cooler control means controls the cooler switching valve in such a manner that when the bypass valve is closed, the cooling passage is open and the cooler bypass passage is closed, and when the bypass valve is open, the cooling passage is closed and the cooler bypass passage is open.

7. The internal combustion engine according to any one of claims 1 to 6, **characterized in that** the EGR passage is connected to the intake passage upstream of a compressor of the turbocharger.

8. The internal combustion engine according to claim 2 or 3, **characterized in that** the acquisition means includes an exhaust gas flow sensor, arranged in the exhaust passage between the turbine and the portion where the bypass passage branches off.

9. The internal combustion engine according to any one of claims 1 to 8, **characterized in that** the burner device includes a fuel addition valve, employed to add fuel to the exhaust passage, and ignition means, for igniting the fuel added through the fuel addition valve.

10. The internal combustion engine according to claim 9, **characterized in that** the burner device includes at least one of a burner catalyst, for oxidizing the fuel that is added, and an impingement plate, on which the added fuel impinges.

11. The internal combustion engine according to any one of claims 1 to 10, **characterized by** further comprising: an exhaust treatment device, arranged in the exhaust passage downstream of the burner device.

12. The internal combustion engine according to claim 11, **characterized in that** the exhaust treatment device is located in the exhaust passage between the burner device and the portion where the EGR passage branches off.
